(19) Europäisches Patentamt / European Patent Office / Office européen des brevets

(11) **EP 3 984 507 B1**

(12) **EUROPEAN PATENT SPECIFICATION**

(45) Date of publication and mention
of the grant of the patent:
**21.08.2024 Bulletin 2024/34**

(21) Application number: **20382903.1**

(22) Date of filing: **15.10.2020**

(51) International Patent Classification (IPC):
**A61G 10/04** *(2006.01)* **A62B 7/14** *(2006.01)*

(52) Cooperative Patent Classification (CPC):
**A62B 7/14; A61G 10/04; B64D 2013/0677**

(54) **MODULAR HEALTH CARE SYSTEM**

MODULARES GESUNDHEITSFÜRSORGESYSTEM

SYSTÈME MODULAIRE DE SOINS DE SANTÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.04.2022 Bulletin 2022/16**

(73) Proprietors:
• **Airbus Defence and Space, S.A.U.
28906 Getafe - Madrid (ES)**
• **Airbus Defence and Space GmbH
82024 Taufkirchen (DE)**

(72) Inventors:
• **SALVAGO ARTECHE, Juan
E-28906 Getafe, Madrid (ES)**
• **BALESTRA, Andrea
E-28906 Getafe, Madrid (ES)**

• **HOEFER, Georg
E-28906 Getafe, Madrid (ES)**
• **FEITO CABRERO, Andrés
E-28906 Getafe, Madrid (ES)**
• **SÁNCHEZ PERAL, Ignacio
E-28906 Getafe, Madrid (ES)**
• **THALHEIM, Lars
82024 Taukirchen (DE)**

(74) Representative: **ABG Intellectual Property Law,
S.L.
Avenida de Burgos, 16D
Edificio Euromor
28036 Madrid (ES)**

(56) References cited:
WO-A1-03/028810     GB-A- 2 240 722
US-A1- 2009 044 800   US-A1- 2014 366 875
US-A1- 2016 303 405

EP 3 984 507 B1

**Description**

## TECHNICAL FIELD OF THE INVENTION

The present invention belongs to the field of in-flight medical assistance, in particular, it relates to the field of on-board equipment for medical oxygen supply.

More in particular, the present invention proposes a modular health care system which makes use of an autonomous on-board oxygen generating system using air at low pressure such as in the range of 0 - 70 psig (1 psig=6,8947 KPa)

## BACKGROUND OF THE INVENTION

Air missions that include in-flight medical assistance to patients, such as the evacuation of populations in areas of armed conflict or pandemic, require that aircraft have complex systems and subsystems designed, among others, to obtain, distribute and supply oxygen.

In particular, since these systems need to meet any oxygen demand, typically very high, for medical use to patients, the equipment intended for said circuit shall comprise a large number of pneumatic and electrical subsystems distributed throughout the structure of the aircraft in order to prevent an overfull demand or insufficient supply.

The most extended technical solution for current transportation units, such as transport aircrafts or helicopter platforms, in relation to the concept of in-flight medical assistance that requires supplying oxygen for medical use, is the transportation and use of a large number of high pressure oxygen cylinders.

Since it is impossible to predict the amount of oxygen that will be required in the mission to supply all patients, it is necessary to oversize the volume of oxygen stored, that is, the number of oxygen cylinders transported in the aircraft, in order to cover any potential peak demand.

Accordingly, the need to transport additional high pressure oxygen cylinders implies an increase in resource costs and specialized workload dedicated to ground and in-flight logistic and maintenance operations such as cylinder loading, refilling and handling.

Therefore, the aircraft total weight is increased, and the efficiency of the medical flight crew is reduced due to the time invested in the checking and handling of the oxygen cylinders, given that, as an example of an evacuation mission, flight nurses and medical directors may be responsible of up to 40 patients for up to 10 hours during a medical evacuation flight.

Unfortunately, the use and transportation of high pressure stored oxygen cylinders inherently implies an increased risk of ignition and fire explosion. Accordingly, as a further consequence of oversizing the volume of stored oxygen, and thus the number of oxygen cylinders in the aircraft, to cover potential peak demands, the risk of potential undesirable fire events increases.

This fact causes the design aircraft configured for in-flight medical assistance to patients, in terms of configuration, installation and distribution of the oxygen cylinders, to be strongly conditioned by the subsequent safety requirements that the aircraft must meet to obtain civil certification.

For example, for civil certification, patient transport units (PTUs) making use of oxygen, cannot be installed in the UERF (Uncontained Engine Rotor Failure) area and other zones where the cylinders can be impacted by released parts.

Additionally, in the aircraft industry there are technical solutions related to on-board oxygen generating systems which make use of aircraft bleed air for satisfying high pressure oxygen generation demand. However, these systems impose strict and complex design requirements that must be taken into account, such as the installation of additional ram air channels for heat exchanging with the bleed air or air preconditioning subsystems.

Unfortunately, the unavoidable presence of all these elements associated to each on-board oxygen generating system implies paying a penalty in terms of drag, weight, power consumption, electrical noise, engineering complexity, manufacturing and maintenance costs and hours.

Document US 2016/303405 A1 describes a system and method for delivering oxygen to a passenger of an aircraft including a supply of oxygen, an oral-nasal mask, a controller for adjusting a flow of oxygen from the supply of oxygen to the oral-nasal mask, and a sensor for determining a user's blood oxygen saturation level, wherein the controller adjusts the flow of oxygen based on the sensor's determination of the user's blood oxygen saturation level.

## SUMMARY OF THE INVENTION

The present invention provides a solution for the aforementioned problems by a modular health care system for an aerial vehicle according to claim 1 and such an aerial vehicle according to claim 15. Advantageous embodiments are defined in the dependent claims.

Along the entire document, reference shall be made to a number of particular terms for which a description will be now provided. Therefore, these terms must be construed as follows.

Throughout the text the terms 'high pressure', or 'high pressure oxygen', will be used. It shall be understood that said terms are used to refer to the pressure range at which oxygen is normally stored in bottles or cylinders for its transportation and supply. More specifically, it shall be understood that the pressure in said oxygen bottles can reach values between 1850 - 3000 psig.

In the same way, the term 'low pressure' will be used to refer to the values at which the stream of oxygen-enriched gas is pumped and channeled through the gas distribution circuit (i.e., piping) to the different medical modules for medical applications, or is stored in a corresponding tank when it is present in at least one medical module, said 'low pressure' values being of an order of magnitude equivalent to the pressure values of the ambient air inside the cabin from which the gas may be generated. In particular, the operative values for the pressure of the oxygen-enriched gas used in the present invention, and referred to as 'low pressure', may be in the range of 0 - 70 psig, preferably 30 - 70 psig, and more preferably between 42 - 54 psig.

In this specification the following non-SI units are used as customary in the aeronautical industry, which may be converted to the respective SI or metric unit according to the following conversion: 1 psig (*pound per square inch*) is equal to 6894,75728 Pa (*Pascal,* N.m$^{-2}$).

The term 'aerial vehicle' shall be understood as any aerial vehicle that can be used in medical missions, such as evacuation missions from conflict zones, and that thus must be provided with medical equipment. In particular, examples of aerial vehicles can be an airplane or a helicopter.

In relation to the previous term, it shall be understood that the terms 'cabin' and/or 'cargo' of the aerial vehicle refers to the interior volume of said vehicle envisaged for housing the crew or necessary equipment. Such interior volume housing breathable ambient air from which the oxygen may be extracted and concentrated for its subsequent medical use. In particular examples, said cabin can be an open space such as the case of helicopters which may have an open wall; or a pressurized air space such is the case of airplanes.

The oxygen generation means are configured for concentrating oxygen out of air at low pressure such as in the range of 0 - 70 psig (0 psig equals to atmospheric pressure air at flight altitude). Air at these conditions may be found in the aerial vehicle, for instance,

- from bleed air systems just before being injected into the cabin, typically at 30°C and 35 - 42 psig,
- from ram air for non-pressurized cabins such as of some low-altitude helicopters, or
- from the cabin itself if, for instance, atmospheric oxygen generation means are used.

Nevertheless, in a preferred embodiment, the oxygen generation means are configured for concentrating oxygen out of the cabin air. Advantageously, this allows to carry the oxygen generation means together with the modular health care system and be directly installed therein.

Regarding the 'stream of oxygen-enriched gas' (or just 'oxygen-enriched air') generated by the system according to the invention, and adapted for medical use, it shall be understood that comprises oxygen (also known as dioxygen in 'Oxygen therapy') in a concentration substantially higher than the ambient air in the cabin from which it may be generated from. In particular, it may comprise a minimal concentration of 93% by volume. Therefore, it helps to maintain stable levels of oxygen in the blood of the patient. The oxygen supply according to the invention is continuous and, unlike an oxygen cylinder, it can never be depleted while the system is powered.

As for the term 'Patient Transfer Unit' (so-called PTU), it shall be understood as an example of medical module in terms of individual equipment which is adapted for the 'medical evacuation' (MEDEVAC) and treatment of a patient. Accordingly, it shall comprise elements such as a medical stretcher provided with instruments and monitoring subsystems which can include continuous electrocardiogram monitoring, and/or non-invasive blood pressure, and/or oxygen saturation, and/or temperature monitors. All of those elements being properly secured either to the airframe or the PTU itself and able to be powered for correct and uninterrupted functioning.

All the features described in this specification, including the claims, description and drawings, can be combined in any combination, with the exception of combinations of such mutually exclusive features.

A modular health care system is provided for an aerial vehicle, the system comprising:

an oxygen service module comprising

- oxygen generation means, configured for concentrating oxygen out of air at pressure in the range of 0 - 70 psig, such that a stream of oxygen-enriched gas is generated;
- gas distribution piping;

a plurality of medical modules, such as Patient Transportation Units, each of the plurality of medical modules comprising

- oxygen dosage means configured for supplying oxygen-enriched gas to a patient;

wherein the oxygen generation means are in fluidic communication with the plurality of medical modules by means of the gas distribution piping, such that the stream of oxygen-enriched gas generated by the oxygen generation means is channelled through the gas distribution piping and supplied to the plurality of medical modules by means of the oxygen dosage means.

For the generation of oxygen (i.e., dioxygen) in the form of a stream of oxygen enriched-gas which is channeled and distributed to a plurality of medical modules for later supply to patients, the modular system comprises an oxygen service module.

Said oxygen service module comprises oxygen generation means, which may be in the form of at least one oxygen concentrator unit, and if more than one, preferably evenly distributed throughout the cabin of the aerial vehicle. More in particular, said oxygen concentrator units may be embedded in the very own walls of the cabin, thus preventing the physical presence of parts of the system which may interfere with the rest of the equipment or crew within the cabin. Alternatively, at least oxygen concentrator unit may be a standalone movable unit also installable within the modular health care system itself.

According to an embodiment comprising oxygen concentrator units embedded within the walls, a plurality of inlets are disposed in the walls, each inlet before a respective concentrator unit, in order to take ambient air from within the cabin and then channel it towards the corresponding oxygen concentrator unit.

The gas distribution piping may comprise a series of tubes, ducts, hoses, or pipes establishing the fluidic communication between the oxygen generation means and each of the plurality of medical modules, thus channelling the oxygen-enriched air generated by the oxygen generations means of the oxygen service module.

Further, the gas distribution piping may be in the form of a series of pneumatic conduits of polymeric material that are embedded within the walls of the fuselage of an aerial vehicle, such as an airplane or a helicopter. Although it is not explicitly referred to, the person skilled in the art shall understand that the distribution piping may comprise customary elements present in all kind of pneumatic installations, such as pumps, manifolds, or valves.

In a particular embodiment, the oxygen generation means further comprise a membrane unit, said membrane unit comprising a nano-composite ceramic membrane.

Advantageously, since the oxygen-enriched gas is generated *in situ* out of air at low pressure (preferably out of the cabin air) in a continuous operative mode, there is no potential limitation of oxygen supply to the patients. The degree of automation is increased, which accelerates all the processes related to medical assistance. This also increases the reliability of operations and of the entire system.

According to this increase level of automation when compared to former oxygen cylinders based systems, the level of human interaction is reduced, and so the possibilities of occurrence of human error for instance in pre-flight filling level checks. Also as a consequence of supressing the former high pressure oxygen cylinders, the total weight of the equipment is greatly reduced, and so the resource and time costs dedicated to the handling and maintenance operations, given that the refilling stage of the cylinders before every MEDEVAC mission is eliminated thereby.

Additionally, a further advantageous effect of oxygen generation according to the oxygen service module of the invention is the use of low pressure oxygen-enriched gas in all the stages of the system, from generation to ultimate supply to a patient. Accordingly, the operative risk of fire explosion or propagation associated to high pressure oxygen system is thus neglected.

Additionally, the modularity of the system, along with the suppression of the use of high pressure oxygen cylinders, provides the system with a compact and robust configuration which results in a simpler concept of health care schemes in an aerial vehicle, thus providing great versatility when dealing with the restrictive space and geometric requirements of aerial vehicles design.

Therefore, a modular health care system according to the present invention allows easy and simple implementation of the system in any desired location of the whole area of the aerial vehicle, even in those locations disregarded by traditional schemes due to the aforementioned requirements for civil certification that must be met, avoiding the installation of flammable or explosive material in the UERF (Uncontained Engine Rotor Failure) risk area.

In a particular embodiment, the gas distribution piping comprises gas filtering means configured for filtering the stream of oxygen-enriched gas and, downstream of such gas filtering means, a filtered oxygen-enriched gas circuit configured for channeling and supplying a stream of filtered oxygen-enriched gas to the plurality of medical modules.

In a particular embodiment, the filtering means comprise an active carbon filter and/or a high efficiency particle air (HEPA).

In a particular embodiment, at least one of the plurality of medical modules comprise a tank configured for storing oxygen-enriched gas, the tank being in fluidic communication with the gas distribution piping and comprising at least one outlet, said at least one outlet being in fluidic communication with oxygen dosage means.

For a single MEDEVAC mission, the total demand of oxygen at different moments can fluctuate enormously depending on the total number of patients as well as their respective particular oxygen needs. In particular, actual medical oxygen systems have to cover breathing profiles of patients for peak flows between 15 and 200LPM (litres per minute).

The tanks according to this embodiment may be installed for each medical module, and being filled only when needed, for ensuring sufficient oxygen-enriched gas supply for patients during temporary high demand, as in the case of a patient emergency. The oxygen-enriched gas stored within any tank is kept at low pressure, so that the risks associated to the use of high pressure oxygen cylinders are prevented.

Advantageously, the health care system of the invention, provided with at least one medical module which comprises the aforementioned tank will be able cover any eventual peak demand and reduce stored oxygen quantity to a minimum.

In a particular embodiment, the oxygen dosage means of at least one medical module is a continuous flow mask, and the outlet is a regulating valve configured for supplying the continuous flow mask with an oxygen-enriched gas flow between 2-4 litres per minute (LPM).

In a particular embodiment, the oxygen dosage means further comprises a ventilator machine. Thus, in this embodiment, the oxygen dosage means of at least one medical module is a ventilator machine supplying the oxygen-enriched gas flow to either a regular flow mask or the continuous flow mask.

Accordingly, the outlet of the tank can be in fluid communication with the ventilator machine or the regulating valve be within the ventilator machine.

Either way, the tank is provided with a dedicated outlet for the continuous flow mask and another outlet for the ventilator machine, or two branches spreads from the regulating valve.

In a particular embodiment, the gas distribution piping comprises flow controlling means configured for reversibly interrupting the flow of the stream of oxygen-enriched gas towards at least one of the plurality of medical modules.

Accordingly, medical modules can be disabled selectively from the oxygen distribution grid thus balancing oxygen supplying demands as required.

The system further comprises a data processing module.

In an embodiment, at least one tank (preferably all of the tanks) comprises gas sensing means configured for measuring at least one fluidic parameter of the oxygen-enriched gas stored within. Said parameter being at least one between pressure and oxygen concentration, wherein the gas sensing means are configured for:

- generating a data signal comprising information of the parameter of the oxygen-enriched gas stored within such tank;
- transmitting said data signal to the data processing module,

and the data processing module is configured for receiving and processing the data signal generated and transmitted by the gas sensing means.

In a particular embodiment, the gas sensing means comprise a pressure sensor.

The flow controlling means comprises at least one automatic filling valve commanded by the data processing module, each automatic filling valve being configured for controlling the flow of the stream of oxygen-enriched gas towards a respective tank. Thus, the data processing module is configured to execute the opening/closure of each automatic filling valve based on the data signal received from the pressure sensor of the respective tank, according to the following instructions:

- opening the at least one automatic filling valve when such pressure sensor of a respective tank provides a data signal comprising a pressure value below a predetermined low threshold; and
- closing the at least one automatic filling valve when the pressure sensor provides a data signal comprising a pressure value above a predetermined high threshold.

Advantageously, a modular health care system according to this embodiment is provided with an intelligent centralized distribution operative mode which allows separation of the oxygen-enriched gas supply management from the different medical modules and allows to have minimal needed oxygen quantity with minimal supply pressure.

In particular, the data processing module in communication with the pressure sensor(s) of the tank(s) which provides the data processing module with information of the pressure inside the tank of a medical module, will manage the oxygen-enriched gas supply to the medical module(s).

As mentioned, every medical module is provided with a tank, each tank comprising a pressure sensor communicating with the data processing module, which provides centralized management. In a further embodiment, at least one high-demanding medical module comprises more than one tanks.

Since the oxygen service module provides medical oxygen to a plurality of medical modules, if any of the tanks of each respective medical module is determined to be filled by the data processing module, based on the information received from the pressure sensor of said tank, the corresponding medical module can be set into an energy safe mode.

In particular, the flow of the stream of oxygen-enriched gas towards the tank of said medical module will be interrupted by the closure of the corresponding filling valve.

Advantageously, the data processing module can be programmed so as to implement an algorithm to control each of filling valves which regulate the flow of oxygen-enriched gas towards a respective tank of a medical module.

Accordingly, when the pressure sensor of the tank provides a value below a predetermined low threshold, the corresponding filling valve is commanded to open.

On the contrary, when the pressure sensor provides a value above a given high threshold, the corresponding filling valve is commanded to close.

Advantageously, the pressure inside any tank can be kept always in between a low threshold and a high threshold at all times.

In a particular embodiment, the gas sensing means comprises an oxygen concentration sensor, and the data processing module is configured to determine a malfunction of the system based on a comparison between the oxygen concentration value provided by the data signal generated by the oxygen concentration sensor and a predetermined range of acceptable oxygen concentration of the oxygen-enriched gas stored within the tank.

In a particular embodiment, the data processing module is configured to execute the closure of the automatic filling valve upon determination of a malfunction of the system.

Based on the inlet and outlet flow of the tanks, the flow of the stream of oxygen-enriched air towards the tank can be deactivated, thus isolating said tank.

Therefore, in use, since oxygen is created in situ and on-demand, the tanks are by default almost empty conveying the received stream oxygen-enriched air into the dosage means. Second, in high-demand situations, tanks are filled for as long as this situation lasts with low pressure letting particular tanks being isolated in case a malfunction of the system is declared.

In a particular embodiment, the gas distribution piping comprises flow sensing means configured for:

- measuring the flow rate of the stream of oxygen-enriched gas towards at least one of the plurality of medical modules;
- generating a data signal comprising information of the volumetric flow rate of the stream of oxygen-enriched gas towards the tank of such at least one medical module;
- transmitting said data signal to the data processing module;

and the data processing module is configured for receiving and processing the data signal generated and transmitted by the flow sensing means.

In a particular embodiment, the flow sensing means comprise a volumetric flow sensor, preferably a volumetric flow sensor for each tank.

In a preferred embodiment, the data processing module is configured for estimating the mass flow rate of the stream of oxygen-enriched gas supplied to the oxygen dosage means of each medical module, according to the following parameters defined in the data processing module:

- V: volume of the tank;
- R: the gas constant;
- P: the value of pressure measured by the pressure sensor provided to

the data processing module in the form of a data signal, and to the following instructions:

- calculating the mass flow rate of the stream of oxygen-enriched gas into the tank based on the volumetric flow sensor value and the pressure sensor value, the calculated value of the mass flow rate of the stream of oxygen-enriched gas into the tank being defined as $\mu$;
- calculating the mass flow rate of the stream of oxygen-enriched gas provided to a patient by the oxygen dosage means using the following formula:

$$Oxygen\text{-}enriched\ gas\ provided\ to\ a\ patient\ =\ \mu - (V/RT)*dP/dt$$

Additionally to the pressure value inside the tank of each medical module provided by its respective pressure sensor, volumetric flow sensors may be used for measuring the flow of oxygen-enriched gas towards each tank.

Accordingly, the data processing module provided with the information regarding said parameter may determine oxygen-enriched gas consumption of the patient.

In a particular embodiment, at least one of the plurality of medical modules comprise health sensing means configured for:

- recording at least one health parameter of a patient, said parameter being at least one of the following: body core temperature, oxygen blood saturation, cardiac rhythm or blood flow;
- generating a data signal comprising information of said least one health parameter of a patient;
- transmitting said data signal to the data processing module,

and the data processing module is configured for receiving and processing the data signal generated and transmitted by the health sensing means.

In a particular embodiment, the system further comprises a portable user interface module.

In a preferred embodiment, the data signal comprising information of at least one health parameter of a patient generated by the health sensing means is a wireless data signal. The medical module further comprises a transmitter configured for emitting the wireless data signal; whereas the data processing module comprises a receiver configured for receiving the wireless data signal. The portable user interface module being configured for:

- receiving the wireless data signal generated by the health sensing means;
- displaying at least one health parameter of a patient, said parameter being at least one of the following: body core temperature, oxygen blood saturation, cardiac rhythm or blood flow.

The user interface module may be in the form of a tablet, a PDA or a smartphone, or any other portable or handheld communication device. Wireless technology significantly improves health monitoring and assistance, and thus the quality of medical service, since it allows real-time data sharing, patient triage and team coordination for better priorization of patient treatment.

Health data gathered by the health sensing means of the medical module, and transmitted by a wireless signal, such as a Bluetooth signal, allows permanent update of the patient's status shown in the portable user interface module.

Therefore, patient documentation, health data and alerts are accessible in a much more agile and comfortable way, which considerably increases the efficiency of the medical staff, as well as reducing the workload. Accordingly, the relative operational capacity of a given medical crew is increased, and thus, the capacity of said crew to provide medical coverage to a greater number of patients, which results in a possibility of also increasing the total capacity of patient transportation.

In a particular embodiment, the portable user interface module is a programmable portable interface device configured for:

- receiving a user input comprising information of the mass flow rate of the stream of oxygen-enriched gas to be supplied to the continuous flow mask;
- generating and transmitting a wireless control signal to the data processing module;

wherein the data processing module is configured for controlling the opening/closure of the regulating valve based on the wireless control signal received from the programmable portable interface device.

The user input comprises information of the mass flow rate to be supplied to the patient by means of the continuous flow mask.

As stated above, the user input may similarly comprise information of the mass flow rate of the stream of oxygen-enriched gas to be supplied by the ventilator machine having a regulating valve connected to it, or its own regulating valve.

Thus, in this embodiment, the data processing module is configured for controlling the operation of the ventilator machine based on the wireless control signal received from the programmable portable interface device.

In a particular embodiment, the data processing module comprises data storing means configured for collecting the health information of a patient sensed by the health sensing means.

In a preferred embodiment, the data processing module is further configured for broadcasting a signal comprising health information of the patients sensed by the health sensing means to a remote server. In addition, the data processing module is configured for receiving a signal broadcast by such remote server.

Advantageously, patient data are stored locally for patient history update, patient heath analysis and patient auto health reporting.

In a more particular embodiment, the remote server with which the data processing module communicates is located in a hospital, such that the health data is streamed and the hospital staff can react upon the incoming health information and thus prepare any treatment or safety protocol before the patients arrive.

In a second inventive aspect, the invention also provides an aerial vehicle comprising a modular health care system according to any of the embodiments of the first inventive aspect.

In a particular embodiment, at least one medical module and/or the oxygen service module configured for generating and distributing oxygen-enriched gas out of air at pressure in the range of 0 - 70 psig, preferably out of the cabin air, are installed within the uncontained engine rotor failure (UERF) area.

## DESCRIPTION OF THE DRAWINGS

These and other characteristics and advantages of the invention will become clearly understood in view of the detailed description of the invention which becomes apparent from preferred embodiments of the invention, given just as an example and not being limited thereto, with reference to the drawings.

Figure 1    This figure shows a block diagram of an embodiment of a modular health care system according to the invention.

Figure 2    This figure shows a schematic representation of the relation between the oxygen service module, a medical module and a data processing module, according to an embodiment of the invention.

Figure 3    This figure shows a schematic representation of the relation between the health sensing means of a medical module, the data processing module, and a portable user interface module according to an embodiment of the invention.

Figure 4    This figure shows an aircraft comprising a modular health care system according to an embodiment of the invention.

## DETAILED DESCRIPTION OF THE INVENTION

Once the object of the invention has been outlined, specific non-limitative embodiments are described hereinafter.

The person skilled in the art shall recognize that aspects of the present invention described herein below may be embodied as a modular health care system (1) or an aerial vehicle (1000).

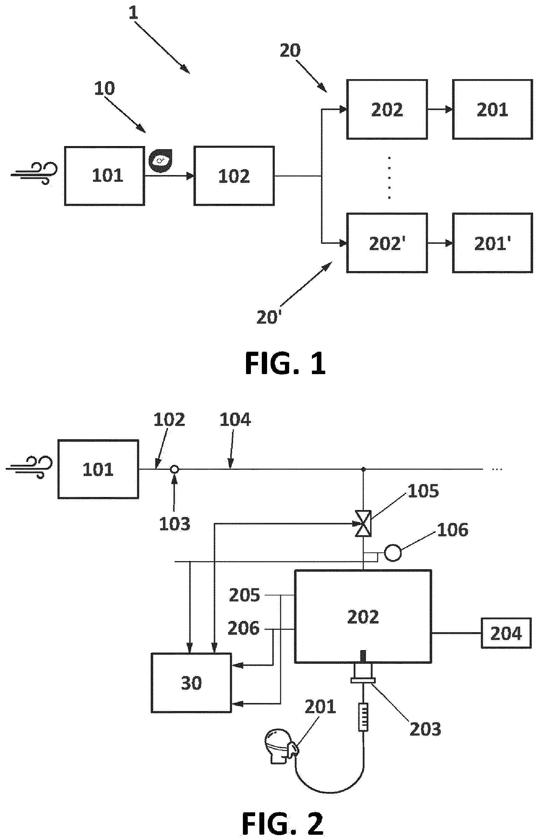

Figure 1 depicts a block diagram of an embodiment of a modular health care system (1) for an aerial vehicle (1000) according to the invention. In particular, the system (1) comprises an oxygen service module (10) which serves the purpose of generating a stream of oxygen-enriched gas out of air at pressure in the range of 0 - 70 psig, preferably out of the air in the cabin of the aerial vehicle (1000), for later medical use by a plurality of medical modules (20, 20'). These medical modules (20, 20') are individual equipment adapted for medical evacuation of patient as well as are adapted for their treatment. A particular example of medical modules are 'Patient Transfer Units'.

For the oxygen generating function, the oxygen service module (10) comprises oxygen generation means (101) configured for concentrating oxygen out of air at pressure in the range of 0 - 70 psig, preferably out of the air in the cabin of the aerial vehicle (1000). Said oxygen generation means (101) may be in the form of a plurality of oxygen concentrators units in any desired location of the whole area of the aerial vehicle (1000), even in those locations disregarded by traditional schemes due to the civil certification requirements that forbid the location of high pressure oxygen cylinders in the Uncontained Engine Rotor Failure risk area.

For exemplary purposes, in the following it will be explained that the oxygen generation means are configured for concentrating oxygen out of air at pressure in the range of 0 - 70 psig from the air in the cabin of the aerial vehicle (1000). Nevertheless, suitable air at these conditions may also be found in the aerial vehicle, for instance, from the bleed air system just before being injected into the cabin or from ram air for non-pressurized cabins such as of some low-altitude helicopters.

In a particular embodiment, the oxygen concentrator unit(s) (101) are embedded within the walls of the cabin of the aerial vehicle (1000), so that a plurality of inlets are also disposed in such walls, each inlet before a respective oxygen concentrator unit (101). The inlets ingest ambient air from the interior of the cabin and then are configured to channel it towards the corresponding oxygen concentrator unit (10). Thus, in this embodiment, the inlets form part of the oxygen service module (10).

After the oxygen of said air taken from the cabin of the aerial vehicle (1000) is concentrated in the oxygen concentrator units (101), a stream of oxygen-enriched gas is generated for being distributed and supplied to the plurality of medical modules (20).

For the purpose of channelling and conducting the oxygen-enriched gas, the modular health care system (1) of the invention dispose of a gas distribution piping (102) which, according to the conceptual diagram shown in Figure 1 may be in the form of a plurality of pneumatic conduits, preferably made of polymeric material, and embedded within the walls, ceiling or deck of the fuselage of the aerial vehicle (1000).

Therefore, a fluidic communication is established between the oxygen generation units (101) and the medical modules (20, 20'), by means of the gas distribution piping (102).

In particular, the block diagram of Figure 1 shows that the gas distribution piping (102) is supplying an stream of oxygen-enriched gas to a plurality of medical modules (20), each of those medical modules (20, 20') comprising a tank (202, 202') configured for storing oxygen-enriched gas at low pressure, this is, at pressure levels around 50 psig. In this way, in the event of any oxygen peak demand provoked by a patient emergency, the supply of oxygen-enriched gas to patients is not interrupted.

Each of the tanks (202, 202') is in fluid communication with a corresponding oxygen dosage means (201, 201') configured for supplying oxygen-enriched gas to a patient according to his/her medical needs.

Figure 2 shows an embodiment of a modular health care system (1) for an aerial vehicle (1000) wherein an oxygen service module (10), which comprises oxygen generation means (101), is shown generating a stream of oxygen-enriched gas out of the air in the cabin of the aerial vehicle (1000).

The oxygen service module (10) is in fluidic communication with a gas distribution piping (102) which comprises gas filtering means (103), and so, the stream of oxygen-enriched air is filtered before being channelled and supplied to the plurality of medical modules (20).

In particular, in the embodiment shown, the gas filtering means (103) may be in the form of an active carbon filter and/or an high efficiency particle air (HEPA) installed downstream of the oxygen concentration means (101).

Accordingly, the portion of the gas distribution piping (102) which is located downwards of the gas filtering means (103) is defined as a filtered oxygen-enriched gas circuit (104) wherein only filtered oxygen-enriched gas is channeled and supplied to the plurality of medical modules (20).

For exemplary purposes, the filtered oxygen-enriched gas circuit (104) that channels the downstream filtered oxygen-enriched gas is shown as a straight line from which a branch is hanging, said branch representing the supply to one of the plurality of medical modules (20).

However, it will be understood that the dotted line represents the continuity of the filtered oxygen-enriched gas circuit (104), which supplies additional medical modules (20). For exemplary purposes, although only one branch will be described, the defined features are reproducible for each of the other branches which are not shown.

Said branch of the filtered oxygen-enriched gas circuit (104), is in fluid communication with a flow controlling means (105) configured for reversibly interrupting the flow of the stream of oxygen-enriched gas. In particular, is in the form of an automatic filling valve (105) which regulates the flow of the stream of towards the tank (202) of the medical module (20).

In addition to the filling valve (105), the branch further comprises flow sensing means configured for measuring the flow rate of the stream of oxygen-enriched gas towards the tank (202), said flow sensing means being in the form of a volumetric flow sensor (106).

The tank (202) itself comprises several gas sensing means (205, 206) configured for analyzing and providing information of fluidic parameters of the filtered oxygen-enriched gas stored within. In particular the tank (202) shown comprises a pressure sensor (205) and an oxygen concentration sensor (206).

Further, the tank (202) comprises a regulating valve (203) which stablishes fluidic communication with the oxygen dosage means (201) which in the embodiment shown is in the form of a continuous flow mask (201) configured for supplying the continuous flow mask (201) with an oxygen-enriched gas flow between 2-4 litres per minute (LPM).

Instead of, or additionally to the continuous flow mask (201), the tank may be directly connected to a ventilator machine (204) or through a regulating valve (203). In fact, this regulating valve (203) can be installed within the ventilator machine (204) as depicted in figure 2.

The filling valve (105), the volumetric flow sensor (106), the pressure sensor (205), and the oxygen concentration sensor (206) are all configured for generating a data signal comprising information of the pressure of the oxygen-enriched gas stored within the tank (202); and for transmitting said data signal, such that all of them are electronically connected to a data processing module (30) for centralized control and management of all the signals and the information generated.

Advantageously, a centralized processing unit such as said module (30) may check, control and report the integrity and operative status of all of the plurality of medical modules (20) and their corresponding tanks (202).

In particular, the data processing module (30) shown is configured for executing the following algorithms.

*Executing the opening/closing the automatic filling valve* (105) based on the data signal received from the pressure sensor (205), according to the following instructions:

- opening the at least one automatic filling valve (105) when the pressure sensor (205) provides a data signal comprising a pressure value below a predetermined low threshold; and
- closing the at least one automatic filling valve (105) when the pressure sensor (205) provides a data signal comprising a pressure value above a predetermined high threshold.

*Determining a malfunction of the system* (1) based on a comparison between the oxygen concentration value provided by the data signal generated by the oxygen concentration sensor (206) and a predetermined range of acceptable oxygen concentration of the oxygen-enriched gas stored within the tank (202).

*Estimating the mass flow rate of the stream of oxygen-enriched gas supplied to the at least one oxygen dosage means* (201), according to

the following parameters defined in the data processing module (30):

- V: volume of the tank (202);
- R: the gas constant;
- P: the value of pressure measured by the pressure sensor (205) provided to the data processing module (30) in the form of a data signal, and to

the following instructions:

- calculating the mass flow rate of the stream of oxygen-enriched gas into the tank (202) based on the volumetric flow sensor (106) value and the pressure sensor (205) value, the calculated value of the mass flow rate of the stream of oxygen-enriched gas into the tank (202) being defined as $\mu$;
- calculating the mass flow rate of the stream of oxygen-enriched gas provided to a patient by the oxygen dosage means (201) using the following formula:

$$Oxygen\text{-}enriched\ gas\ provided\ to\ a\ patient\ =\ \mu - (V/RT)*dP/dt$$

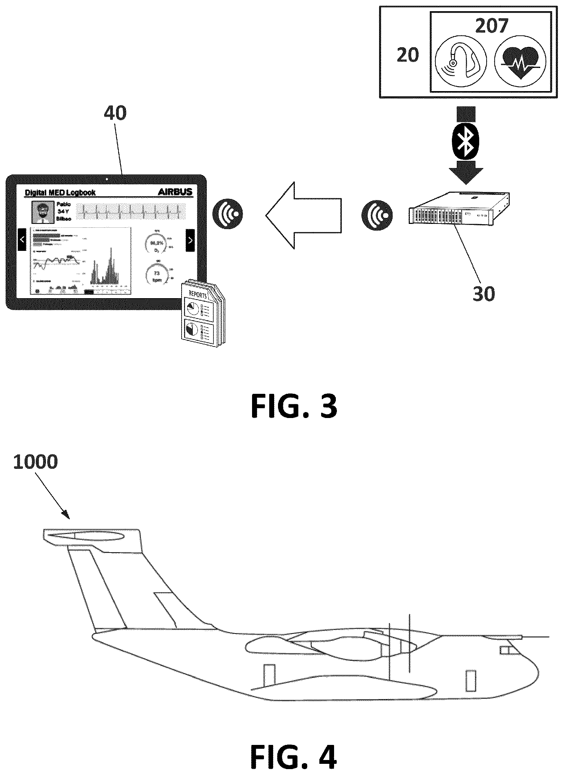

Figure 3 shows a schematic representation of the relation between the health sensing means (207) of a medical module (20), the data processing module (30), and a portable user interface module (40) according to an embodiment of the invention.

The health sensing means (207) of the medical module (20) shown in Figure 3 are configured for recording at least one health parameter of a patient, said parameter being at least one of the following: body core temperature, oxygen blood saturation, cardiac rhythm or blood flow.

Additionally, said heath sensing means (207) are configured for establishing an electronic communication with the data processing module (30), such that the health sensing means (207) provide the data processing module with a data signal comprising information of the health status of a patient. In particular, the data signal generated is a wireless data signal. More in particular, the wireless data signal is a Bluetooth signal.

Further, a portable user interface module (40) is shown in Figure 3. Said portable user interface module (40) is also configured establishing wireless communication with the health sensing means (207) and the data processing module (30), so that the portable user interface module (40) may receive health data of patients wirelessly.

Said health data received wirelessly by the portable user interface module is then displayed in a screen for agile visualization by the medical crew in the aerial vehicle (1000). In particular, the portable user interface module (40) is in the form of a tablet.

In this way, a patient evacuated from a crisis area is boarded in the aerial vehicle, positioned in a medical module (20) and monitored by means of the health sensing means (207), typically hard wired with corresponding medical devices. It is also possible for the medical devices of the health sensing means (207) to communicate wirelessly.

This patient health data is reported wirelessly to either a portable user interface module (40) belonging to the medical director or to a control panel enabling this director to monitor health parameters of many patients as feasibly and legally possible.

Flight nurses are also wearing own wearable or portable displays fed with the total or limited health information of all or part of the treated patients. Thus, any change in the patient health will be rapidly noticed by either the medical director or the responsible flight nurse enabling quick and coordinated decision-making.

Health information can be broadcast to a remote server placed in the destination hospital to advance any medical detail necessary for applying correct treatment. Further, health reports are generated automatically after mission.

Figure 4 shows an aerial vehicle (1000), such as a fixed or rotary wing vehicle. More in particular, it is depicted an aircraft comprising a modular health care system (1) according to the invention.

**Claims**

1. Modular health care system (1) for an aerial vehicle (1000), the system (1) comprising:

    an oxygen service module (10) comprising

- oxygen generation means (101) configured for concentrating oxygen out of air at pressure in the range of 0-482,63 KPa (0-70 psig) such that a stream of oxygen-enriched gas is generated;
- gas distribution piping (102);

a plurality of medical modules (20), such as Patient Transportation Units, each of the plurality of medical modules (20) comprising

- oxygen dosage means (201) configured for supplying the oxygen-enriched gas to a patient;

wherein the oxygen generation means (101) are in fluidic communication with the plurality of medical modules (20) by means of the gas distribution piping (102), such that the stream of oxygen-enriched gas generated by the oxygen generation means (101) is channelled through the gas distribution piping (102) and supplied to the plurality of medical modules (20) by means of the oxygen dosage means (201);
wherein at least one of the plurality of medical modules (20) comprises a tank (202) configured for storing the oxygen-enriched gas;
and wherein the tank (202) is in fluidic communication with the gas distribution piping (102); and comprises at least one outlet (203) in fluidic communication with oxygen dosage means (201);
wherein the system (1) further comprises a data processing module (30), and wherein at least one tank (202) comprises gas sensing means (205, 206) configured for measuring at least one fluidic parameter of the oxygen-enriched gas stored within, said parameter being at least one between pressure and oxygen concentration;
the gas sensing means (205, 206) are configured for:

- generating a data signal comprising information of the parameter of the oxygen-enriched gas stored within such tank (202);
- transmitting said data signal to the data processing module (30); and

the data processing module (30) is configured for receiving and processing the data signal generated and transmitted by the gas sensing means (205, 206);
wherein the gas sensing means (205, 206) comprise an oxygen concentration sensor (206);
wherein:

the data processing module (30) is configured to determine a malfunction of the system (1) based on a comparison between the oxygen concentration value provided by the data signal generated by the oxygen concentration sensor (206) and a predetermined range of acceptable oxygen concentration of the oxygen-enriched gas stored within the tank (202); and
the data processing module (30) is configured to execute the closure of the automatic filling valve (105) upon determination of a malfunction of the system (1).

2. The system (1) according to claim 1, wherein the gas distribution piping (102) comprises

gas filtering means (103) configured for filtering the stream of oxygen-enriched gas; and
downstream of such gas filtering means (103), a filtered oxygen-enriched gas circuit (104) configured for channeling and supplying a stream of filtered oxygen-enriched gas to the plurality of medical modules (20);

wherein the filtering means (103) comprise, preferably, an active carbon filter and/or an high efficiency particle air (HEPA).

3. The system (1) according to claim 1, wherein

the oxygen dosage means (201) of at least one medical module (20) is a continuous flow mask and/or a ventilator machine (204); and
the at least one outlet (203) is a regulating valve configured for supplying the continuous flow mask (201) or the ventilator machine (204) with an oxygen-enriched gas flow between 2-4 litres per minute (LPM).

4. The system (1) according to any of the previous claims, wherein the gas distribution piping (102) comprises flow controlling means (105) configured for reversibly interrupting the flow of the stream of oxygen-enriched gas towards at least one of the plurality of medical modules (20).

**5.** The system (1) according to claims 1 and 4 wherein

the gas sensing means (206) comprise a pressure sensor (205);
the flow controlling means (105) comprise at least one automatic filling valve controlled by the data processing module (30), each automatic filling valve (105) being configured for controlling the flow of the stream of oxygen-enriched gas towards a respective tank (202),
and wherein
the data processing module (30) is configured to execute the opening/closure of each automatic filling valve (105) based on the data signal received from the pressure sensor (205) of the respective tank (202), according to the following instructions:

- opening the at least one automatic filling valve (105) when the pressure sensor (205) provides a data signal comprising a pressure value below a predetermined low threshold; and
- closing the at least one automatic filling valve (105) when the pressure sensor (205) provides a data signal comprising a pressure value above a predetermined high threshold.

**6.** The system (1) according to any of the previous claims, wherein

the gas distribution piping (102) comprises flow sensing means configured for:

- measuring the flow rate of the stream of oxygen-enriched gas towards at least one of the plurality of medical modules (20);
- generating a data signal comprising information of the volumetric flow rate of the stream of oxygen-enriched gas towards the tank (202) of such at least one medical module (20);
- transmitting said data signal to the data processing module (30);

and wherein
the data processing module (30) is configured for receiving and processing the data signal generated and transmitted by the flow sensing means.

**7.** The system (1) according to claim 5 and 6, wherein

the flow sensing means comprise a volumetric flow sensor (106);
the data processing module (30) is configured for estimating the mass flow rate of the stream of oxygen-enriched gas supplied to the oxygen dosage means (201) of each medical module (20), according to the following parameters defined in the data processing module (30):

- V: volume of the tank (202);
- R: the gas constant;
- P: the value of pressure measured by the pressure sensor (205) provided to the data processing module (30) in the form of a data signal, and to

the following instructions:

- calculating the mass flow rate of the stream of oxygen-enriched gas into the tank (202) based on the volumetric flow sensor (106) value and the pressure sensor (205) value, the calculated value of the mass flow rate of the stream of oxygen-enriched gas into the tank (202) being defined as $\mu$;
- calculating the mass flow rate of the stream of oxygen-enriched gas provided to a patient by the oxygen dosage means (201) using the following formula:

$$Oxygen\text{-}enriched\ gas\ provided\ to\ a\ patient\ =\ \mu - (V/RT){*}dP/dt$$

**8.** The system (1) according to any of claims 5 - 7, wherein at least one of the plurality of medical modules (20) comprise health sensing means (207) configured for:

- recording at least one health parameter of a patient, said parameter being at least one of the following: body core temperature, oxygen blood saturation, cardiac rhythm or blood flow;

- generating a data signal comprising information of said least one health parameter of a patient;
- transmitting said data signal to the data processing module (30);

and wherein the data processing module (30) is configured for receiving and processing the data signal generated and transmitted by the health sensing means (207).

9. The system (1) according to claim 8 further comprising a portable user interface module (40), wherein

the data signal comprising information of at least one health parameter of a patient generated by the health sensing means (207) is a wireless data signal; and wherein
the medical module (20) comprises a transmitter configured for emitting the wireless data signal; and
the data processing module (30) comprises a receiver configured for receiving the wireless data signal and wherein
the user interface module (40) is configured for:

- receiving the wireless data signal generated by the health sensing means (207);
- displaying at least one health parameter of a patient, said parameter being at least one of the following: body core temperature, oxygen blood saturation, cardiac rhythm or blood flow.

10. The system (1) according to claims 3 and 9, wherein

the portable user interface module (40) is a programmable portable interface device configured for:

- receiving a user input comprising information of the mass flow rate of the stream of oxygen-enriched gas to be supplied to the patient;
- generating and transmitting a wireless control signal to the data processing module (30);

and wherein
the data processing module (30) is configured for controlling the opening/closure of the regulating valve (203) based on the wireless control signal received from the programmable portable interface device (40).

11. The system (1) according to claims 9 - 10, wherein
the data processing module (30) comprises data storing means configured for collecting the health information of a patient sensed by the health sensing means (207),
and wherein the data processing module (30) is further configured for:

- broadcasting a signal comprising health information of the patients sensed by the health sensing means (207) to a remote server; and
- receiving a signal broadcast by the remote server.

12. An aerial vehicle (1000) comprising a modular health care system (1) according to any of claims 1-11, wherein at least one medical module (20) and/or the oxygen service module (10) configured for generating and distributing oxygen-enriched gas out of air at pressure in the range of 0-482,63 KPa (0-70 psig) are installed within the uncontained engine rotor failure (UERF) area.

**Patentansprüche**

1. Modulares Gesundheitsfürsorgesystem (1) für ein Luftfahrzeug (1000), wobei das System (1) aufweist:

ein Sauerstoffversorgungsmodul (10), das aufweist:

- eine Sauerstofferzeugungseinrichtung (101), die dafür konfiguriert ist, Sauerstoff aus Luft bei einem Druck im Bereich von 0 - 482,63 kPa (0 - 70 psig) zu konzentrieren, so dass ein Strom von mit Sauerstoff angereichertem Gas erzeugt wird,
- eine Gasverteilungsleitung (102);

eine Vielzahl von medizinischen Modulen (20), wie z.B. Patienten-Transport-Einheiten, wobei jedes der Vielzahl von medizinischen Modulen (20) aufweist:

- eine Sauerstoffdosiereinrichtung (201), die dafür konfiguriert ist, das mit Sauerstoff angereicherte Gas einem Patienten zuzuführen,

wobei die Sauerstofferzeugungseinrichtung (101) mittels der Gasverteilungsleitung (102) in Fluidverbindung mit der Vielzahl von medizinischen Modulen (20) steht, so dass der durch die Sauerstofferzeugungseinrichtung (101) erzeugte Strom von mit Sauerstoff angereichertem Gas durch die Gasverteilungsleitung (102) geleitet und mittels der Sauerstoffdosiereinrichtung (201) der Vielzahl von medizinischen Modulen (20) zugeführt wird, wobei mindestens eines der Vielzahl von medizinischen Modulen (20) einen Behälter (202) aufweist, der dafür konfiguriert ist, das mit Sauerstoff angereicherte Gas zu speichern, und wobei der Behälter (202) in Fluidverbindung mit der Gasverteilungsleitung (102) steht und mindestens einen in Fluidverbindung mit der Sauerstoffdosiereinrichtung (201) stehenden Auslass (203) aufweist, wobei das System (1) ferner ein Datenverarbeitungsmodul (30) aufweist, und wobei mindestens ein Behälter (202) Gaserfassungseinrichtungen (205, 206) aufweist, die dafür konfiguriert sind, mindestens einen Fluidparameter des darin gespeicherten, mit Sauerstoff angereicherten Gases zu messen, wobei der Parameter ein Druck und/oder eine Sauerstoffkonzentration ist, wobei die Gaserfassungseinrichtungen (205, 206) dafür konfiguriert sind:

- ein Datensignal zu erzeugen, das eine Information über den Parameter des in einem solchen Behälter (202) gespeicherten, mit Sauerstoff angereicherten Gases aufweist,
- das Datensignal an das Datenverarbeitungsmodul (30) zu übertragen; und

das Datenverarbeitungsmodul (30) dafür konfiguriert ist, das durch die Gaserfassungseinrichtungen (205, 206) erzeugte und übertragene Datensignal zu empfangen und zu verarbeiten, wobei die Gaserfassungseinrichtungen (205, 206) einen Sauerstoffkonzentrationssensor (206) aufweisen, wobei:

das Datenverarbeitungsmodul (30) dafür konfiguriert ist, eine Fehlfunktion des Systems (1) basierend auf einem Vergleich zwischen dem Sauerstoffkonzentrationswert, der durch das durch den Sauerstoffkonzentrationssensor (206) erzeugte Datensignal bereitgestellt wird, und einem vorgegebenen Bereich einer zulässigen Sauerstoffkonzentration des im Behälter (202) gespeicherten, mit Sauerstoff angereicherten Gases zu bestimmen, und das Datenverarbeitungsmodul (30) dafür konfiguriert ist, ein automatisches Füllventil (105) zu schließen, wenn eine Fehlfunktion des Systems (1) bestimmt wird.

2. System (1) nach Anspruch 1, wobei die Gasverteilungsleitung (102) aufweist:

eine Gasfiltereinrichtung (103), die dafür konfiguriert ist, den Strom von mit Sauerstoff angereichertem Gas zu filtern; und stromabwärtsseitig von einer solchen Gasfiltereinrichtung (103) einen Kreislauf (104) für gefiltertes, mit Sauerstoff angereichertes Gas, der dafür konfiguriert ist, einen Strom von gefiltertem, mit Sauerstoff angereichertem Gas zu kanalisieren und der Vielzahl von medizinischen Modulen (20) zuzuführen, wobei die Gasfiltereinrichtung (103) vorzugsweise einen Aktivkohlefilter und/oder einen hocheffizienten Partikelluftfilter (HEPA) aufweist.

3. System (1) nach Anspruch 1, wobei

die Sauerstoffdosiereinrichtung (201) mindestens eines medizinischen Moduls (20) eine Maske mit kontinuierlichem Durchfluss und/oder ein Beatmungsgerät (204) ist, und der mindestens eine Auslass (203) ein Regelventil ist, das dafür konfiguriert ist, die Maske (201) mit kontinuierlichem Durchfluss oder das Beatmungsgerät (204) mit mit Sauerstoff angereichertem Gas bei einem Durchfluss zwischen 2 und 4 Litern pro Minute (LPM) zu versorgen.

4. System (1) nach einem der vorangehenden Ansprüche, wobei die Gasverteilungsleitung (102) eine Durchflussregeleinrichtung (105) aufweist, die dafür konfiguriert ist, den Durchfluss des Stroms von mit Sauerstoff angereichertem Gas zu mindestens einem der Vielzahl von medizinischen Modulen (20) reversibel zu unterbrechen.

5. System (1) nach den Ansprüchen 1 und 4, wobei

die Gaserfassungseinrichtungen (206) einen Drucksensor (205) aufweisen,
die Durchflussregeleinrichtung (105) mindestens ein automatisches Füllventil aufweist, das durch das Datenverarbeitungsmodul (30) gesteuert wird, wobei jedes automatische Füllventil (105) dafür konfiguriert ist, den Durchfluss des Stroms von mit Sauerstoff angereichertem Gas in Richtung zu einem jeweiligen Behälter (202) zu steuern, und wobei
das Datenverarbeitungsmodul (30) dafür konfiguriert ist, das Öffnen/Schließen jedes automatischen Füllventils (105) basierend auf dem Datensignal, das vom Drucksensor (205) des jeweiligen Behälters (202) empfangen wird, gemäß den folgenden Anweisungen auszuführen:

- Öffnen des mindestens einen automatischen Füllventils (105), wenn der Drucksensor (205) ein Datensignal bereitstellt, das einen Druckwert unterhalb eines vorgegebenen niedrigen Schwellenwerts aufweist, und
- Schließen des mindestens einen automatischen Füllventils (105), wenn der Drucksensor (205) ein Datensignal bereitstellt, das einen Druckwert oberhalb eines vorgegebenen hohen Schwellenwerts aufweist.

6. System (1) nach einem der vorangehenden Ansprüche, wobei

die Gasverteilungsleitung (102) eine Durchflusserfassungseinrichtung aufweist, die dafür konfiguriert ist:

- die Durchflussrate des Stroms von mit Sauerstoff angereichertem Gas in Richtung zu mindestens einem der Vielzahl von medizinischen Modulen (20) zu messen,
- ein Datensignal zu erzeugen, das eine Information über die volumetrische Durchflussrate des Stroms von mit Sauerstoff angereichertem Gas in Richtung zum Behälter (202) eines solchen mindestens einen medizinischen Moduls (20) aufweist,
- das Datensignal an das Datenverarbeitungsmodul (30) zu übertragen;

und wobei
das Datenverarbeitungsmodul (30) dafür konfiguriert ist, das Datensignal, das durch die Durchflusserfassungseinrichtung erzeugt und übertragen wird, zu empfangen und zu verarbeiten.

7. System (1) nach Anspruch 5 und 6, wobei

die Durchflusserfassungseinrichtung einen volumetrischen Durchflusssensor (106) aufweist,
das Datenverarbeitungsmodul (30) dafür konfiguriert ist, den Massendurchsatz des Stroms von mit Sauerstoff angereichertem Gas, der der Sauerstoffdosiereinrichtung (201) jedes medizinischen Moduls (20) zugeführt wird, zu schätzen gemäß den folgenden, im Datenverarbeitungsmodul (30) definierten Parametern:

- V: Volumen des Behälters (202);
- R: Gaskonstante;
- P: der durch den Drucksensor (205) gemessene Druckwert, der dem Datenverarbeitungsmodul (30) in Form eines Datensignals zugeführt wird, und

gemäß den folgenden Anweisungen:

- Berechnen des Massendurchsatzes des Stroms von mit Sauerstoff angereichertem Gas in den Behälter (202) basierend auf dem Wert des Volumendurchflusssensors (106) und dem Wert des Drucksensors (205), wobei der berechnete Wert des Massendurchsatzes des Stroms von mit Sauerstoff angereichertem Gas in den Behälter (202) als $\mu$ definiert ist,
- Berechnen des Massendurchsatzes des Stroms von mit Sauerstoff angereichertem Gas, der einem Patienten durch die Sauerstoffdosiereinrichtung (201) zugeführt wird, unter Verwendung der folgenden Formel:

mit Sauerstoff angereichertes Gas, das einem Patienten zugeführt wird = $\mu$ - $(V/RT)*dP/dt.$

8. System (1) nach einem der Ansprüche 5 bis 7, wobei mindestens eines der Vielzahl von medizinischen Modulen (20) eine Gesundheitserfassungseinrichtung (207) aufweist, die dafür konfiguriert ist:

- mindestens einen Gesundheitsparameter eines Patienten aufzuzeichnen, wobei der Parameter mindestens einer der folgenden Parameter ist:

Körperkerntemperatur, Blutsauerstoffsättigung, Herzrhythmus oder Blutdurchfluss;
- ein Datensignal zu erzeugen, das eine Information über den mindestens einen Gesundheitsparameter eines Patienten aufweist,
- das Datensignal an das Datenverarbeitungsmodul (30) zu übertragen,

und wobei das Datenverarbeitungsmodul (30) dafür konfiguriert ist, das durch die Gesundheitserfassungseinrichtung (207) erzeugte und übertragene Datensignal zu empfangen und zu verarbeiten.

9. System (1) nach Anspruch 8, ferner mit einem tragbaren Benutzerschnittstellenmodul (40), wobei:

das Datensignal, das eine Information über mindestens einen Gesundheitsparameter eines Patienten aufweist und durch die Gesundheitserfassungseinrichtung (207) erzeugt wird, ein drahtloses Datensignal ist,
das medizinische Modul (20) einen Sender aufweist, der dafür konfiguriert ist, das drahtlose Datensignal zu emittieren, und
das Datenverarbeitungsmodul (30) einen Empfänger aufweist, der dafür konfiguriert ist, das drahtlose Datensignal zu empfangen, und wobei
das Benutzerschnittstellenmodul (40) dafür konfiguriert ist:

- das durch die Gesundheitserfassungseinrichtung (207) erzeugte drahtlose Datensignal zu empfangen,
- mindestens einen Gesundheitsparameter eines Patienten anzuzeigen, wobei der Parameter mindestens einer der folgenden Parameter ist:
Körperkerntemperatur, Blutsauerstoffsättigung, Herzrhythmus und Blutdurchfluss.

10. System (1) nach den Ansprüchen 3 und 9, wobei das tragbare Benutzerschnittstellenmodul (40) eine programmierbare tragbare Schnittstellenvorrichtung ist, die dafür konfiguriert ist:

- eine Benutzereingabe zu empfangen, die eine Information über den Massendurchsatz des Stroms von mit Sauerstoff angereichertem Gas aufweist, der dem Patienten zugeführt werden soll;
- ein drahtloses Steuersignal zu erzeugen und an das Datenverarbeitungsmodul (30) zu übertragen,

und wobei das Datenverarbeitungsmodul (30) dafür konfiguriert ist, das Öffnen/Schließen des Regelventils (203) basierend auf dem vom programmierbaren tragbaren Schnittstellenmodul (40) empfangenen drahtlosen Steuersignal zu steuern.

11. System (1) nach Anspruch 9 oder 10, wobei

Das Datenverarbeitungsmodul (30) eine Datenspeichereinrichtung aufweist, die dafür konfiguriert ist, die Gesundheitsinformation eines Patienten zu sammeln, die durch die Gesundheitserfassungseinrichtung (207) erfasst wird,
und wobei das Datenverarbeitungsmodul (30) ferner dafür konfiguriert ist:

- ein Signal, das durch die Gesundheitserfassungseinrichtung (207) erfasste Gesundheitsinformation über die Patienten aufweist, an einen abgesetzten Server zu übertragen; und
- ein durch den abgesetzten Server übertragenes Signal zu empfangen.

12. Luftfahrzeug (1000), das ein modulares Gesundheitssystem (1) nach einem der Ansprüche 1 bis 11 aufweist, wobei mindestens ein medizinisches Modul (20) und/oder das Sauerstoffversorgungsmodul (10), die dafür konfiguriert sind, mit Sauerstoff angereichertes Gas aus Luft bei einem Druck im Bereich von 0 - 482,63 kPa (0 - 70 psig) zu erzeugen und zu verteilen, innerhalb des Bereichs des unbeherrschbaren Triebwerksrotorausfalls (UERF) installiert sind.

**Revendications**

1. Système modulaire de soins de santé (1) pour un véhicule aérien (1000), le système (1) comportant :

un module de service en oxygène (10) comportant :

- des moyens de production d'oxygène (101) configurés pour concentrer de l'oxygène de l'air à une pression située dans la plage de 0 à 482,63 kPa (0 à 70 psig) de telle sorte qu'un flux de gaz enrichi en oxygène est produit,
- une tuyauterie de distribution de gaz (102),

une pluralité de modules médicaux (20), tels que des unités de transport de patient, chaque module de la pluralité de modules médicaux (20) comportant :

- des moyens de dosage d'oxygène (201) configurés pour fournir le gaz enrichi en oxygène à un patient,

dans lequel les moyens de production d'oxygène (101) sont en communication fluidique avec la pluralité de modules médicaux (20) au moyen de la tuyauterie de distribution de gaz (102), de telle sorte que le flux de gaz enrichi en oxygène produit par les moyens de production d'oxygène (101) est canalisé à travers la tuyauterie de distribution de gaz (102) et fourni à la pluralité de modules médicaux (20) au moyen des moyens de dosage d'oxygène (201),
dans lequel au moins un module de la pluralité de modules médicaux (20) comporte un réservoir (202) configuré pour stocker le gaz enrichi en oxygène,
et dans lequel le réservoir (202) est en communication fluidique avec la tuyauterie de distribution de gaz (102), et comporte au moins une sortie (203) en communication fluidique avec les moyens de dosage d'oxygène (201),
dans lequel le système (1) comporte en outre un module de traitement de données (30), et
dans lequel au moins un réservoir (202) comporte des moyens de détection de gaz (205, 206) configurés pour mesurer au moins un paramètre fluidique du gaz enrichi en oxygène stocké à l'intérieur, ledit paramètre étant au moins un élément entre une pression et une concentration d'oxygène,
les moyens de détection de gaz (205, 206) sont configurés pour :

- générer un signal de données comportant des informations du paramètre du gaz enrichi en oxygène stocké à l'intérieur d'un tel réservoir (202),
- transmettre ledit signal de données au module de traitement de données (30), et le module de traitement de données (30) est configuré pour recevoir et traiter le signal de données généré et transmis par les moyens de détection de gaz (205, 206), dans lequel les moyens de détection de gaz (205, 206) comportent un capteur de concentration d'oxygène (206),

dans lequel :

le module de traitement de données (30) est configuré pour déterminer un dysfonctionnement du système (1) sur la base d'une comparaison entre la valeur de concentration d'oxygène fournie par le signal de données généré par le capteur de concentration d'oxygène (206) et une plage prédéterminée de concentration d'oxygène acceptable du gaz enrichi en oxygène stocké à l'intérieur du réservoir (202), et
le module de traitement de données (30) est configuré pour exécuter la fermeture de la soupape de remplissage automatique (105) lors de la détermination d'un dysfonctionnement du système (1).

2. Système (1) selon la revendication 1, dans lequel la tuyauterie de distribution de gaz (102) comporte :

des moyens de filtrage de gaz (103) configurés pour filtrer le flux de gaz enrichi en oxygène, et
en aval de tels moyens de filtrage de gaz (103), un circuit de gaz enrichi en oxygène et filtré (104) configuré pour canaliser et fournir un flux de gaz enrichi en oxygène et filtré à la pluralité de modules médicaux (20),
dans lequel les moyens de filtrage (103) comportent, de préférence, un filtre à charbon actif et/ou un filtre à haute efficacité pour les particules d'air (HEPA).

3. Système (1) selon la revendication 1, dans lequel

les moyens de dosage d'oxygène (201) d'au moins un module médical (20) sont un masque à débit continu et/ou une machine de ventilation (204), et
la au moins une sortie (203) est une soupape de régulation configurée pour alimenter le masque à débit continu (201) ou la machine de ventilation (204) avec un débit de gaz enrichi en oxygène compris entre 2 et 4 litres par minute (LPM).

4. Système (1) selon l'une quelconque des revendications précédentes, dans lequel la tuyauterie de distribution de gaz (102) comporte des moyens de commande d'écoulement (105) configurés pour interrompre de manière réversible l'écoulement du flux de gaz enrichi en oxygène vers au moins un module de la pluralité de modules médicaux (20).

5. Système (1) selon les revendications 1 et 4, dans lequel

les moyens de détection de gaz (206) comportent un capteur de pression (205), les moyens de commande d'écoulement (105) comportent au moins une soupape de remplissage automatique commandée par le module de traitement de données (30), chaque soupape de remplissage automatique (105) étant configurée pour commander l'écoulement du flux de gaz enrichi en oxygène vers un réservoir (202) respectif, et
dans lequel
le module de traitement de données (30) est configuré pour exécuter l'ouverture/la fermeture de chaque soupape de remplissage automatique (105) sur la base du signal de données reçu du capteur de pression (205) du réservoir (202) respectif, en fonction des instructions suivantes :

- ouvrir la au moins une soupape de remplissage automatique (105) lorsque le capteur de pression (205) délivre un signal de données comportant une valeur de pression inférieure à un seuil bas prédéterminé, et
- fermer la au moins une soupape de remplissage automatique (105) lorsque le capteur de pression (205) délivre un signal de données comportant une valeur de pression supérieure à un seuil haut prédéterminé.

6. Système (1) selon l'une quelconque des revendications précédentes, dans lequel

la tuyauterie de distribution de gaz (102) comporte des moyens de détection d'écoulement configurés pour :

- mesurer le débit du flux de gaz enrichi en oxygène vers au moins un module de la pluralité de modules médicaux (20),
- générer un signal de données comportant des informations du débit volumique du flux de gaz enrichi en oxygène vers le réservoir (202) d'un tel au moins un module médical (20),
- transmettre ledit signal de données au module de traitement de données (30), et dans lequel

le module de traitement de données (30) est configuré pour recevoir et traiter le signal de données généré et transmis par les moyens de détection d'écoulement.

7. Système (1) selon les revendications 5 et 6, dans lequel

les moyens de détection d'écoulement comportent un capteur de débit volumique (106),
le module de traitement de données (30) est configuré pour estimer le débit massique du flux de gaz enrichi en oxygène fourni aux moyens de dosage d'oxygène (201) de chaque module médical (20), en fonction des paramètres suivants définis dans le module de traitement de données (30) :

- V : volume du réservoir (202),
- R : constante des gaz,
- P : valeur de pression mesurée par le capteur de pression (205) fournie au module de traitement de données (30) sous la forme d'un signal de données, et

des instructions suivantes :

- calculer le débit massique du flux de gaz enrichi en oxygène dans le réservoir (202) sur la base de la valeur du capteur de débit volumique (206) et de la valeur du capteur de pression (205), la valeur calculée du débit massique du flux de gaz enrichi en oxygène dans le réservoir (202) étant définie par $\mu$,
- calculer le débit massique du flux de gaz enrichi en oxygène fourni à un patient par les moyens de dosage d'oxygène (201) en utilisant la formule suivante :

$$\text{Gaz enrichi en oxygène fourni à un patient} = \mu - (V/RT){*}dP/dt$$

8. Système (1) selon l'une quelconque des revendications 5 à 7, dans lequel au moins un module de la pluralité de modules médicaux (20) comporte des moyens de détection sanitaire (207) configurés pour :

- enregistrer au moins un paramètre sur la santé d'un patient, le paramètre étant au moins un des éléments suivants : température centrale corporelle, saturation en oxygène du sang, rythme cardiaque ou débit sanguin,
- générer un signal de données comportant des informations dudit au moins un paramètre sur la santé d'un patient,
- transmettre ledit signal de données au module de traitement de données (30),

et dans lequel le module de traitement de données (30) est configuré pour recevoir et traiter le signal de données généré et transmis par les moyens de détection sanitaire (207).

9. Système (1) selon la revendication 8, comportant en outre un module d'interface utilisateur portable (40), dans lequel

le signal de données comportant des informations d'au moins un paramètre sur la santé d'un patient, généré par les moyens de détection sanitaire (207) est un signal de données sans fil, et dans lequel
le module médical (20) comporte un émetteur configuré pour émettre le signal de données sans fil, et
le module de traitement de données (30) comporte un récepteur configuré pour recevoir le signal de données sans fil
et dans lequel
le module d'interface utilisateur (40) est configuré pour :

- recevoir le signal de données sans fil généré par les moyens de détection sanitaire (207),
- afficher au moins un paramètre sur la santé d'un patient, ledit paramètre étant au moins un des éléments suivants : température centrale corporelle, saturation en oxygène du sang, rythme cardiaque ou débit sanguin.

10. Système (1) selon les revendications 3 et 9, dans lequel

le module d'interface utilisateur portable (40) est un dispositif d'interface portable programmable configuré pour :

- recevoir une entrée d'utilisateur comportant des informations du débit massique du flux de gaz enrichi en oxygène à fournir au patient,
- générer et transmettre un signal de commande sans fil au module de traitement de données (30),

et dans lequel
le module de traitement de données (30) est configuré pour commander l'ouverture/la fermeture de la soupape de régulation (203) sur la base du signal de commande sans fil reçu du dispositif d'interface portable programmable (40).

11. Système (1) selon les revendications 9 à 10, dans lequel

le module de traitement de données (30) comporte des moyens de stockage de données configurés pour collecter les informations sur la santé d'un patient détectées par les moyens de détection sanitaire (207), et dans lequel le module de traitement de données (30) est en outre configuré pour:

- diffuser un signal comportant des informations sur la santé des patients détectées par les moyens de détection sanitaire (207) à un serveur distant, et
- recevoir un signal diffusé par le serveur distant.

12. Véhicule aérien (1000) comportant un système modulaire de soins de santé (1) selon l'une quelconque des revendications 1 à 11, dans lequel au moins un module médical (20) et/ou le module de service en oxygène (10) configuré pour produire et distribuer du gaz enrichi en oxygène de l'air à une pression située dans la plage de 0 à 482,63 kPa (0 à 70 psig) sont installés à l'intérieur de la zone de défaillance non confinée de rotor de moteur (UERF).

**FIG. 1**

**FIG. 2**

**FIG. 3**

**FIG. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016303405 A1